# EUROPEAN PATENT SPECIFICATION

(11) **EP 3 428 818 B1**
(45) Date of publication and mention of the grant of the patent: **25.11.2020**
(21) Application number: 17762501.9
(22) Date of filing: 06.03.2017
(51) Int. Cl.: G06F 21/31, G06F 21/32, H04W 12/06, H04L 29/06

(54) **IDENTITY AUTHENTICATION METHOD AND SYSTEM**
VERFAHREN UND SYSTEM ZUR IDENTITÄTSAUTHENTIFIZIERUNG
PROCÉDÉ ET SYSTÈME D'AUTHENTIFICATION D'IDENTITÉ

(30) Priority: 07.03.2016 CN 201610127887
(43) Date of publication of application: 16.01.2019
(73) Proprietor: Tendyron Corporation, Beijing 100083 (CN)
(72) Inventor: LI, Ming, Beijing 100086 (CN)
(74) Representative: Maiwald Patent- und Rechtsanwaltsgesellschaft mbH
(86) International application number: PCT/CN2017/075725
(87) International publication number: WO 2017/152815

(56) References cited:
- WO-A1-2015/172598
- CN-A- 101 296 080
- CN-A- 102 930 436
- CN-A- 103 679 453
- CN-A- 103 873 244
- CN-A- 105 245 341
- CN-A- 105 938 526
- CN-A- 105 939 195
- CN-A- 105 939 336
- CN-A- 105 956 844
- CN-A- 105 989 488
- CN-A- 105 989 495
- CN-A- 105 989 496
- CN-A- 105 989 497
- CN-A- 105 989 498
- CN-A- 105 991 652
- CN-A- 105 991 653
- CN-A- 105 991 654
- US-A1- 2010 242 102

## Description

### CROSS-REFERENCE TO RELATED APPLICATION

This application claims priority to and benefits of Chinese Patent Application Serial No. 201610127887.X, filed with the State Intellectual Property Office of P. R. China on March 7, 2016,

### FIELD

The present disclosure relates to a field of electronic technology, and in particular, to an identity authentication method and an identity authentication system.

### BACKGROUND

When a user uses an electronic device to obtain authorization for certain specific places (e.g., office areas, confidential areas, etc.), personal items (cars, safes, etc.), dangerous goods (such as firearms, ammunition, etc.), a communication connection is established between the electronic device and electronic systems configured on the places, personal belongings or dangerous goods, and then the electronic device sends a stored key to the electronic system, and the electronic system performs an authentication on the key. It can be seen that in the prior art, such an authorization method allows others to use other people's electronic devices to obtain authorization to perform illegal operations, resulting in loss of property, information etc. of the user.

In addition, in the prior art, since the probability of different people having a same biological character such as fingerprint is very small, biological characters are usually used as a password for the user. In this application, in order to protect the security of the user, when verifying the biological characteristic information, the matching rate is set relative high to avoid the user's account being illegally used, but in this case, since the user's biological characters collected in different states may have slight differences, for example, the fingerprint data of the same fingerprint of the user may be different in cases of the finger being dry and wet, leading to a result that the user's request is rejected since the real fingerprint is regarded as a fake fingerprint, and the user needs to input the fingerprint as the password again. In some cases, the user may need to input the fingerprint for many times, that is, the probability of unsuccessful recognition of a real legitimate user is high, which may reduce the user experience. In the related arts, a technical solution to solve these problems is mainly to optimize the fingerprint matching algorithm. However, the precondition of the solution is that the collected fingerprint data is complete and accurate, and for different states of the collected fingerprint data and the stored fingerprint data, the solution does not work very well.

CN103873244 discloses a method for authenticating a user based on password and biometric information.

US2010242102 discloses a method for using a biometric identification device in a client computer system to subsequently access an authentication system includes receiving biometric sample data which is digitally signed and combining the data with a user ID and PIN.

### SUMMARY

The present disclosure aims to solve one of the above problems to some extent.

The features of the method, system, computer program and computer storage medium according to the present invention are defined in the independent claims, and the preferable features according to the present invention are defined in the dependent claims.

A main objective of the present disclosure is to provide an identity authentication method.

Another objective of the present disclosure is to provide an identity authentication system.

In order to achieve the above objectives, technical solutions of the present disclosure are realized in following manners.

A first aspect of the present disclosure provides an identity authentication method. The method may include: establishing, by a first device, a communication connection with a second device; receiving, by the first device, data to be authenticated transmitted by the second device via the communication connection, the data to be authenticated including digital authentication information and an identity identifier; collecting, by the first device, biological characteristic information; sending, by the first device, the data to be authenticated and the biological characteristic information to a background server; receiving, by the background server, the data to be authenticated and the biological characteristic information; obtaining, by the background server, a pre-stored authentication factor and biological characteristic verification information corresponding to the identity identifier; performing, by the background server, an authentication on the digital authentication information according to the authentication factor, and determining whether a matching rate between the biological characteristic information and the biological characteristic verification information is greater than a first preset value; and when the authentication performed on the digital authentication information is passed and the matching rate between the biological characteristic information and the biological characteristic verification information is greater than the first preset value, determining that an identity authentication for the second device is passed.

Alternatively, the biological characteristic information includes: fingerprint information and/or vein information; and collecting, by the first device, the biological characteristic information includes: when a biological limb is in contact with the first device, collecting the biological characteristic information of a portion of the biological limb in contact with the first device.

Alternatively, receiving, by the first device, the data to be authenticated transmitted by the second device via the communication connection includes: receiving, by the first device, the data to be authenticated broadcast by the second device via the communication connection; or sending, by the first device, an authentication request to the second device via the communication connection; and receiving, by the first device, the data to be authenticated transmitted by the second device in response to the authentication request via the communication connection.

Alternatively, the digital authentication information includes: signature information obtained by digital sign performed on data to be signed using a signature private key; the authentication factor includes: a signature public key corresponding to the signature private key; performing, by the background server, the authentication on the digital authentication information according to the authentication factor includes: performing, by the background server, a signature authentication on the digital authentication information using the signature public key and the data to be signed; or the digital authentication information includes: encrypted information obtained by encrypting information to be encrypted using a symmetric secret key; the authentication factor includes: the symmetric secret key; and performing, by the background server, the authentication on the digital authentication information according to the authentication factor includes: performing, by the background server, the authentication on the encrypted information using the symmetric secret key and the information to be encrypted; or the digital authentication information includes: a dynamic password; the authentication factor includes: a seed secret key for verifying the dynamic password; performing, by the background server, the authentication on the digital authentication information according to the authentication factor includes: performing, by the background server, the authentication on the dynamic password at least using the seed secret key.

Alternatively, the first preset value is smaller than a second preset value, and the second preset value refers to a matching rate indicating that two pieces of biological characteristic information are identical.

Alternatively, establishing, by the first device, the communication connection with the second device includes: establishing, by the first device, the communication connection with the second device via a biological limb.

Another aspect of the present disclosure provides an identity authentication system. The system may include: a first device and a background server, in which the first device is configured to: establish a communication connection with a second device; receive data to be authenticated transmitted by the second device via the communication connection, the data to be authenticated including digital authentication information and an identity identifier; collect biological characteristic information of a biological limb; and send the data to be authenticated and the biological characteristic information to the background server; and the background server is configured to: receive the data to be authenticated and the biological characteristic information; obtain a pre-stored authentication factor and biological characteristic verification information corresponding to the identity identifier; perform an authentication on the digital authentication information according to the authentication factor, and determine whether a matching rate between the biological characteristic information and the biological characteristic verification information is greater than a first preset value, the first preset value being smaller than a second preset value, the second preset value referring to a matching rate indicating that two pieces of biological characteristic information are identical; and when the authentication performed on the digital authentication information is passed and the matching rate between the biological characteristic information and the biological characteristic verification information is greater than the first preset value, determine that an identity authentication for the second device is passed.

Alternatively, the biological characteristic information includes: fingerprint information and/or vein information; and the first device collects the biological characteristic information by an act of: when the biological limb is in contact with the first device, collecting the biological characteristic information of a portion of the biological limb in contact with the first device.

Alternatively, the first device receives the data to be authenticated transmitted by the second device via the communication connection by acts of: receiving, by the first device, the data to be authenticated broadcast by the second device via the communication connection; or sending, by the first device, an authentication request to the second device via the communication connection; and receiving, by the first device, the data to be authenticated transmitted by the second device in response to the authentication request via the communication connection.

Alternatively, the digital authentication information includes: signature information obtained by digital sign performed on data to be signed using a signature private key; the authentication factor includes: a signature public key corresponding to the signature private key; the background server performs the authentication on the digital authentication information according to the authentication factor by an act of: performing, by the background server, a signature authentication on the digital authentication information using the signature public key and the data to be signed; or the digital authentication information includes: encrypted information obtained by encrypting information to be encrypted using a symmetric secret key; the authentication factor includes: the symmetric secret key; and the background server performs the authentication on the digital authentication information according to the authentication factor by an act of: performing, by the background server, the authentication on the encrypted information using the symmetric secret key and the information to be encrypted; or the digital authentication information includes: a dynamic password; the authentication factor includes: a seed secret key for verifying the dynamic password; the background server performs the authentication on the digital authentication information according to the authentication factor by an act of: performing, by the background server, the authentication on the dynamic password at least using the seed secret key.

Alternatively, the first device establishes the communication connection with the second device by an act of: establishing, by the first device, the communication connection with the second device via a biological limb.

It may be seen from the above technical solutions provided by the present disclosure that, with the identity authentication method provided by the present disclosure, a background server may perform a double authentication on the digital authentication information and the biological characteristic information, such that the probability of unsuccessful recognition of real legitimate user may be reduced and user experience may be improved.

Specific embodiments of the present disclosure will be described in detail with reference to the drawings in followings. The above and other objectives, advantages and features of the present disclosure will become apparent to those skilled in the art.

### BRIEF DESCRIPTION OF THE DRAWINGS

Some specific embodiments of the present disclosure will be described in detail in an exemplary but nonrestrictive manner with reference to the drawings. The same reference numbers in the drawings identify the same or similar components or parts. Those skilled in the art should understand that the drawings are not necessarily drawn to scale. In the drawing:
Fig. 1 is a flowchart of an identity authentication method according to Embodiment 1 of the present disclosure; and
Fig. 2 is a schematic structural diagram of an identity authentication system according to Embodiment 2 of the present disclosure.

### DETAILED DESCRIPTION

### Embodiment 1

This embodiment provides an identity authentication method.

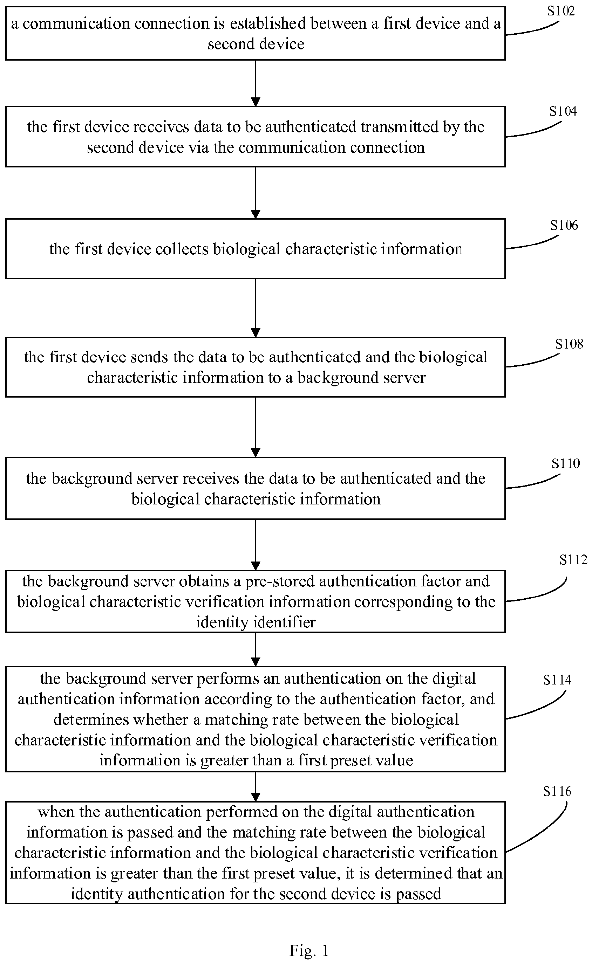

Fig. 1 is a flowchart of an identity authentication method according to this embodiment of the present disclosure. As illustrated in Fig. 1, the method mainly includes acts in blocks S102-S116.

At block S102, a communication connection is established between a first device and the second device.

In this embodiment, the first device may be connected in a wireless or wired manner such as NFC, Bluetooth, and the like.

In an alternative implementation of the embodiment of the present disclosure, the first device may establish a communication connection with a second device via the biological limb in a wireless or wired manner, that is, the first device establishes the communication connection with the second device via an intra-body communication (IBC). The biological limb includes but is not limited to a human body. For example, the first device may be a POS machine, a scanning terminal installing an Alipay application, etc., a mobile terminal, a PDA, a desktop, a notebook, an access control, etc., and the second device may be a device implanted in the human body or worn on the human body. The device implanted in the human body may be, for example, a blood flow sensor, a pulse sensor, a body temperature sensor and the like, and the device worn on the human body may be wearable electronic devices such as a wristband, a wristwatch, a necklace, a ring, a belt and the like.

In an alternative implementation of the present disclosure, the first device may establish the communication connection with the first device in following manners: when the first device detects that the biological limb is in contact with the first device and a distance between the biological limb and the second device is within a preset range, the first device may establish the communication connection with the second device via a biological limb. For example, when it is detected that a finger of a human body wearing a wristband touches the first device, the first device establishes the communication connection with the wristband via the human body.

In this embodiment, the second device may be worn on the user's body or placed in the user's body, or loaded in the clothing or accessories worn by the user, such that the second device may be communicatively connected to the first device. For example, the second device may be on the user's wrist or placed in the pocket of the user's clothing, and when the user's identity needs to be authenticated, such as, when logging in to a network, opening a door having a access control and performing a payment operation, the user may access to the first device (i.e., the verifying device) via his/her own limb (such as the arm, face). When the limb approaches the first device a certain distance (e.g., a few millimeters), the first device establishes a communication connection with a second device via the user's limb. Since the intra-body communication is performed in a certain range like 3 to 5 meters, the intra-body communication connection can be established only when the human body enters the preset range of the first device.

As an alternative implementation in this embodiment, the first device may establish the communication connection with the second device via a biological limb in a wired or wireless manner. For example, the first device and the second device may be communicated at least in the following two manners.

### Wired manner:

The first device and the second device are each provided with an electrode. When the first device is in contact with the biological limb (the human body) implanting or wearing the second device (for example, when the user wearing the wristwatch uses his/her finger to touch the POS machine), the human body is used as a conductor, and the electrodes of both sides are connected to form a path in the human body, i.e., the so-called communication connection in the wired manner. In this manner, the first device needs to be in contact with the human body wearing the second device.

### Wireless manner:

In the wireless manner, the first device and the second device (such as a POS machine and a wristwatch) may both detect whether the surrounding electric field changes. If the other party enters the range allowing the intra-body communication, the change of the field strength may be detected, and the communication connection may be established. Specifically, taking the second device as an example, the second device is worn on or built in the human body, and the oscillation of the transmitter of the second device causes the body to generate an electric field. When the distance between the second device and the first device is within the range allowing the intra-body communication, the receiver of the first device detects a change in the electric field, such that the communication connection is established between the first device and the second device. In this manner, the first device docs not need to be in contact with the human body wearing the second device.

The above method utilizes the human body as a transmission medium of an electrical signal to realize information interaction among the body surface, the body, and the surrounding of the human body (3 to 5 meters). Compared to the traditional wireless communication technology such as Bluetooth, WIFI, RF, infrared and the like, signals are transmitted through the human body during the intra-body communication, the electromagnetic noise has little effect on the communication, and this manner has advantages such as low power consumption, high confidentiality and low human damage. In addition, there is no problem of low efficiency of multi-person communication, and the redundant connection problem of the wired communication method may be avoided.

At block S104, the first device receives data to be authenticated transmitted by the second device via the communication connection, in which the data to be authenticated may include digital authentication information and an identity identifier.

In this embodiment, the digital authentication information may include at least one of the following: signature information, encrypted information, and a dynamic password.

Electronic signature information may be a signature information obtained by digital sign performed on the data to be signed using a signature private key (which may be a signature private key of the second device or a private key of a security device (for example, KEY) connected to the second device. When performing the authentication on the signature information, a signature public key corresponding to the signature private key is obtained, and a signature verification is performed on the electronic signature information using the signature public key. If the signature verification is passed, the authentication is passed. The data to be signed may be the above-mentioned identity identifier, or may be a random number generated by the second device or the security device connected to the second device. In this case, the data to be authenticated may further include the random number generated by the second device. In addition, the data to be signed may also be a random number generated by the first device. In this case, the first device may send a verification request to the second device after establishing a communication connection with the second device. The request carries the random number generated by the first device, and the second device signs the random number using the signature private key after receiving the random number, so as to obtain the above signature information, and uses the random number as the data to be signed, which can prevent from a replay attack. In this alternative embodiment, the digital authentication information is the signature information, such that the identity of the user of the second device can be ensured when performing the authentication.

The encrypted information may be a MAC value obtained by calculating the data to be encrypted by the second device using a symmetric secret key obtained by negotiating with the first device, and when performing the authentication on the encrypted information, the verified MAC value is obtained by calculating the data to be encrypted using the symmetric secret key, and the encrypted information is compared with the verified MAC value, if the encrypted information is in conformity with the verified MAC value, the authentication is passed. Alternatively, the encrypted information may be ciphertext information obtained by calculating the data to be encrypted by the second device using a symmetric secret key obtained by negotiating with the first device, and when performing the authentication on the encrypted information, the ciphertext data is decrypted by using the symmetric secret key, and the information obtained by the decryption is compared with the data to be encrypted. If the information obtained by the decryption is in conformity with the data to be encrypted, the authentication is passed.

The dynamic password may be a dynamic password generated based on a seed secret key. When performing the authentication on the dynamic password, a verification value is calculated using the seed secret key, the verification value is compared with the dynamic password. If the verification value is in consistent with the dynamic password, the authentication is passed. The password may be time-based or event-based, and may be a dynamic challenge code, which is not limited in this embodiment.

In this embodiment, the digital authentication information may be authenticated by any of the foregoing implementations to ensure the legitimacy of the second device.

In the above embodiment, the second device may calculate the digital authentication information by itself, or may interact with another device (for example, an electronic device having a signature function, an encryption function, or a dynamic password function) to obtain the data authentication information, which is not limited in this embodiment.

In an alternative implementation of this embodiment, the identity identifier may be a device identifier of the second device, a user ID, and the like, which may uniquely identify the identity of the user. The identity identifier may be uniquely associated with the authentication factor for authenticating the digital authentication information and the biological characteristic verification information of the second device's user, so as to perform a double verification both on the digital authentication information and the biological characteristic information. Therefore, after the double verification is passed, it can be determined that the biological characteristic information and the digital authentication information are all from the same user, and the user's legality is guaranteed.

In an alternative implementation of the embodiment, the second device may send the data to be authenticated to the first device after the communication connection is established. For example, a switch may be set on the second device, and after the user turns on the switch, the second device starts to broadcast the data to be authenticated. After the first device establishes the communication connection with the second device, the first device receives the data to be authenticated broadcasted by the second device, or the second device may actively detect whether the communication connection is established with the first device, and if yes, the second device actively sends the data to be authenticated to the first device. With this implementation, the process may be simplified and the authenticated speed may be improved.

In another alternative implementation of the embodiment of the present disclosure, the second device may send the data to be authenticated after receiving the request of the first device. In this alternative implementation, the first device may send an authentication request to the second device after establishing a communication connection with a second device, and the second device sends the data to be authenticated to the second device in response to the authentication request after receiving the authentication request. For example, in a payment process, the first device may send the authentication request carrying transaction information to the second device, and after receiving the authentication request, the second device sends the data to be authenticated to the first device in response to the authentication request. The second device may extract key information from the transaction information and display the key information after receiving the transaction information, and after receiving the user confirmation, a to-be-authenticated request is sent to the first device to ensure the security of the transaction. In addition, in the alternative implementation, the authentication request may further carry the to-be-calculated information such as the random number etc. determined by the first device, and after receiving the authentication request, the second device may sign or encrypt the to-be-calculated information or generate the dynamic password according to the to-be-calculated information.

At block S106, the first device collects biological characteristic information.

The biological characteristic information includes at least one of the following: fingerprint information, iris information, face information, and vein information. In this embodiment, the first device collects biometric information of the biological limb when the first device approaches the biological limb in close contact with the second dcvicc. For example, in a short time period (e.g., 3 second) of the user's finger touching the touch component of the POS machine, the touch component of the POS machine collects fingerprint information. For another example, during a time period of establishing the intra-body communication connection between the user's wristwatch and the Alipay payment terminal (the payment terminal has a photographing function, which can be used to collect the face information), the face information is collected by the payment terminal.

In this step, in particular, in a case of the biological characteristic information including the fingerprint information and/or the vein information, the biological limb needs to touch the first device to collect the biological characteristic information. As an alternative implementation, collecting the biological characteristic information of the biological limb may include: collecting the biological characteristic information of the part of the biological limb touching the first device when the biological limb touches the first device. For example, the user's finger touches a fingerprint collection portion of the first device, or the user's wrist touches a vein information collection portion of the first device. With this alternative implementation, since the user's limb needs to touch the first device to collect the biological characteristic information, such that the current authentication is permitted by the user, thereby avoiding a situation that the authentication process is triggered caused by an inadvertent proximity between the first device and the second device.

At block S108, the first device sends the data to be authenticated and the biological characteristic information to a background server.

At block S110, the background server receives the data to be authenticated and the biological characteristic information.

At block S112, the background server obtains a pre-stored authentication factor and biological characteristic verification information corresponding to the identity identifier.

In this embodiment, the background server pre-stores the user's authentication factor and biological characteristic verification information according to the identity identifier (of the second device, or of the user of the second device, or of a security device connected to the second device (e.g., KEY, a dynamic port token, etc.) when, for example, registering the second device or the security device connected to the second device or allocating the second device or the security device connected to the second device to the user, which will not be limited in this embodiment.

At block S114, the background server performs an authentication on the digital authentication information according to the authentication factor, and determines whether a matching rate between the biological characteristic information and the biological characteristic verification information is greater than a first preset value.

In this embodiment, the background server obtains the authentication factor and the biological characteristic verification information according to the authentication identifier information, and uses the authentication factor and the biological characteristic verification information to authenticate the digital authentication information and the biological characteristic information. The authentication factor and the biological characteristic verification information are uniquely associated with authentication identification information. Therefore, the authentication factor and the biological characteristic verification information corresponding to the user can be uniquely queried according to the authentication identification information, such that the digital authentication information and the legitimacy of the user may be guaranteed after the double authentication is passed using the digital authentication information and the biological characteristic information.

In this step, the manner of the background server authenticating the digital authentication information by using the authentication factor is related to a specific form of using the digital authentication information. For example, if the digital authentication information is to sign the data to be signed using a signature private key (which may be a private key of the second device, or a private key of the security device (for example, KEY) connected to the second device) to obtain the signature information, the authentication factor is a signature public key corresponding to the signature private key. When performing the authentication on the digital authentication information, the data to be signed is calculated by using the signature public key to obtain a signature verification value, and the signature verification value is compared with the received signature information. If the signature verification value is in conformity with the received signature information, the authentication is passed; otherwise, the authentication fails. If the digital authentication information is to encrypt the information to be encrypted using the symmetric secret key to obtain the encrypted information, the authentication factor is the symmetric secret key, and when performing the authentication on the digital authentication information, the symmetric secret key is used to encrypt the information to be encrypted, the encrypted verification information obtained after the encryption is compared with the received encrypted information. If the encrypted verification information obtained after the encryption is in conformity with the received encrypted information, the authentication is passed; otherwise, the authentication fails. Alternatively, the received encrypted information may be decrypted by using the symmetric secret key, and the decrypted plaintext information is compared with the information to be encrypted. If the decrypted plaintext information is in conformity with the information to be encrypted, the authentication is passed; otherwise, the authentication fails. In the case of the digital authentication information being the dynamic password, the authentication factor is a seed secret key for verifying the dynamic password. When performing the authentication on the digital authentication information, the seed secret key is used to generate the dynamic password, and the generated dynamic password is compared with the received dynamic password. If the generated dynamic password is in conformity with the received dynamic password, the authentication is passed; otherwise, the authentication fails.

In this embodiment, the first preset value indicating the matching rate between the biological characteristic information and the biological characteristic verification information is smaller than the matching rate (i.e., the second preset value) indicating whether two pieces of biological characteristic information is the same biological characteristic information in the actual application. For example, suppose that in actual existing application, when the matching rate of two pieces of fingerprint information reaches 99% (that is, the ratio indicating that the two pieces of fingerprint information are the same), the two pieces of fingerprint information are considered to be the fingerprint information of the same fingerprint (i.e., the second preset value is 99%); otherwise, the two pieces of fingerprint information are not the fingerprint information of the same fingerprint. However, the first preset value in this embodiment may be 80%, that is, it is determined whether the matching rate between the received biological characteristic information and the biological characteristic verification information reaches 80% instead of 99%.

At block S116, when the authentication performed on the digital authentication information is passed and the matching rate between the biological characteristic information and the biological characteristic verification information is greater than the first preset value, it is determined that an identity authentication for the second device is passed.

In an alternative implementation of the embodiment of the present disclosure, the background server may also return the authentication result to the first device. In addition, after the identity authentication of the second device is passed, the background server may perform subsequent operations such as granting the second device authorization, opening the door having an access control, etc., or performing the payment process in the payment process, which will not be limited in this embodiment.

There may be a probability of unsuccessful recognition of a real legitimate user using the biological characteristic information authentication technology in the prior art. Taking fingerprint recognition as an example, in many cases, the user's fingerprint is real but the background system identifying error occurs, mistakenly identifying the user's fingerprint as a fake fingerprint, and thus failing to pass the authentication, and the payment transaction cannot be realized; while sometimes, the fingerprint of the illegal user is fake but is also authenticated by the background system, causing economic losses for the legitimate user. These situations occur for a high probability. However, in this embodiment, the double authentication performed on the digital authentication information and the biological characteristic information may prevent from the situation where some illegal users are successfully identified, and can reduce the probability of the situation of unsuccessful recognition of real legitimate user. Firstly, by the above three methods for authenticating the digital authentication information, it can be determined that the user is a legitimate user, and if the user is an illegal user, the digital authentication cannot be passed, then the operation of the fake fingerprint authentication does not occur, thereby prevent from the situation where some illegal users are successfully identified. Secondly, in the case of ensuring that the user is a legitimate user, the background can reduce the similarity criterion of the matching the two pieces of biometric information, so as to reduce the probability of unsuccessful recognition of real legitimate user. For example, theoretically, in order to make the two pieces of biometric information being matched completely, the similarity should reach at least 99% (the second preset value). If the background finds out that the similarity is only 90%, it will be identified as mismatch and the authentication will not be passed, leading to the case where the real fingerprint is recognized as a fake fingerprint. In the present disclosure, since the digital authentication has ensured that the user is a legitimate user, the similarity for perfectly matching can be reduced to 80% (the first preset value), which means that it is considered to be successfully matching as long as the similarity reaches 80% (the first preset value). Therefore, when the similarity of the two pieces of biometric information is 90%, the authentication can be passed, thereby avoiding the situation of unsuccessful recognition of real legitimate user, such that the probability of unsuccessful recognition of real legitimate user in the biological characteristic information authentication technology may be reduced.

With the identity authentication method provided by the embodiment of the present disclosure, the background server performs the double authentication on the digital authentication information and the biological characteristic information, the probability of unsuccessful recognition of real legitimate user may be reduced and the user experience may be improved.

### Embodiment 2

This embodiment provides an identity authentication system. The system is configured to perform the method provided in Embodiment 1.

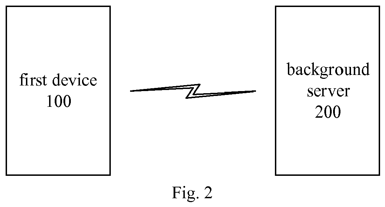

Fig. 2 is a schematic structural diagram of an identity authentication system according to this embodiment. As illustrated in Fig. 2, the system mainly includes: a first device 100 and a background server 200.

In this embodiment, the first device 100 is configured to: establish a communication connection with a second device; receive data to be authenticated transmitted by the second device via the communication connection, the data to be authenticated including digital authentication information and an identity identifier; collect biological characteristic information of a biological limb when the biological limb enters a preset range of the first device 100; and send the data to be authenticated and the biological characteristic information to the background server 200.

The background server 200 is configured to: receive the data to be authenticated and the biological characteristic information; obtain a pre-stored authentication factor and biological characteristic verification information corresponding to the identity identifier; perform an authentication on the digital authentication information according to the authentication factor, and determine whether a matching rate between the biological characteristic information and the biological characteristic verification information is greater than a first preset value; and when the authentication performed on the digital authentication information is passed and the matching rate between the biological characteristic information and the biological characteristic verification information is greater than the first preset value, determine that an identity authentication for the second device is passed. The first preset value is smaller than a second preset value, and the second preset value refers to a matching rate indicating that two pieces of biological characteristic information are identical.

In an alternative implementation of the embodiment of the present disclosure, the first device 100 may establish the communication connection with the second device via a biological limb. For example, the first device 100 may be a POS machine, a scanning terminal installing an Alipay application, etc., a mobile terminal, a PDA, a desktop, a notebook, an access control, etc., and the second device may be a device implanted in the human body or worn on the human body. The device implanted in the human body may be, for example, a blood flow sensor, a pulse sensor, a body temperature sensor and the like, and the device worn on the human body may be wearable electronic devices such as a wristband, a wristwatch, a necklace, a ring, a belt and the like.

In an alternative implementation of the present disclosure, the first device 100 may establish the communication connection with the first device 100 in following manners: when the first device 100 detects that the biological limb is in contact with the first device 100 and a distance between the biological limb and the second device is within a preset range, the first device may establish the communication connection with the second device via a biological limb. For example, when it is detected that a finger of a human body wearing a wristband touches the first device 100, the first device establishes the communication connection with the wristband via the human body.

In this embodiment, the second device may be worn on the user's body or placed in the user's body, or loaded in the clothing or accessories worn by the user, such that the second device may be communicatively connected to the first device. For example, the second device may be on the user's wrist or placed in the pocket of the user's clothing, and when the user's identity needs to be authenticated, such as, when logging in to a network, opening a door having an access control and performing a payment operation, the user may access to the first device 100 (i.e., the verifying device) via his/her own limb (such as the arm, face). When the limb approaches the first device 100 a certain distance (e.g., a few millimeters), the first device 100 establishes a communication connection with a second device via the user's limb. Since the intra-body communication is performed in a certain range like 3 to 5 meters, the intra-body communication connection can be established only when the human body enters the preset range of the first device 100.

As an alternative implementation in this embodiment, the first device 100 may establish the communication connection with the second device via a biological limb in a wired or wireless manner. For example, the first device 100 and the second device may be communicated at least in the following two manners.

### Wired manner:

The first device 100 and the second device are each provided with an electrode. When the first device 100 is in contact with the biological limb (the human body) implanting or wearing the second device (for example, when the user wearing the wristwatch uses his/her finger to touch the POS machine), the human body is used as a conductor, and the electrodes of both sides are connected to form a path in the human body, i.e., the so-called communication connection in the wired manner. In this manner, the first device 100 needs to be in contact with the human body wearing the second device.

### Wireless manner:

In the wireless manner, the first device 100 and the second device (such as a POS machine and a wristwatch) may both detect whether the surrounding electric field changes. If the other party enters the range allowing the intra-body communication, the change of the field strength may be detected, and the communication connection may be established. Specifically, taking the second device as an example, the second device is worn on or built in the human body, and the oscillation of the transmitter of the second device causes the body to generate an electric field. When the distance between the second device and the first device 100 is within the range allowing the intra-body communication, the receiver of the first device 100 detects a change in the electric field, such that the communication connection is established between the first device and the second device. In this manner, the first device 100 does not need to be in contact with the human body wearing the second device.

The above method utilizes the human body as a transmission medium of an electrical signal to realize information interaction among the body surface, the body, and the surrounding of the human body (3 to 5 meters). Compared to the traditional wireless communication technology such as Bluetooth, WIFI, RF, infrared and the like, signals are transmitted through the human body during the intra-body communication, the electromagnetic noise has little effect on the communication, and this manner has advantages such as low power consumption, high confidentiality and low human damage. In addition, there is no problem of low efficiency of multi-person communication, and the redundant connection problem of the wired communication method may be avoided.

In an alternative implementation of this embodiment, the identity identifier may be a device identifier of the second device, a user ID, and the like, which may uniquely identify the identity of the user, and the identity identifier may be uniquely associated with the second user to authenticate the authentication factor of the digital authentication information and the biological characteristic verification information are used to perform a double verification on the digital authentication information and the biological characteristic information. Therefore, after the double verification is passed, it can be determined that the biological characteristic information and the digital authentication information are all from the same user, and the user's legality is guaranteed.

In an alternative implementation of the embodiment, the second device may actively send the data to be authenticated to the first device after the communication connection is established. In this alternative implementation, the first device 100 may receive the data to be authenticated transmitted by the second device in following manners. The first device 100 receives the data to be authenticated transmitted by the second device via the communication connection. For example, a switch may be set on the second device, and after the user turns on the switch, the second device starts to broadcast the data to be authenticated. After the first device 100 establishes the communication connection with the second device, the first device 100 receives the data to be authenticated broadcasted by the second device, or the second device may actively detect whether the communication connection is established with the first device 100, and if yes, the second device actively sends the data to be authenticated to the first device 100. With this implementation, the process may be simplified and the authenticated speed may be improved.

In another alternative implementation of the embodiment of the present disclosure, the second device may also send the data to be authenticated after receiving the request of the first device 100. In this alternative implementation, the first device 100 may receive the data to be authenticated transmitted by the second device in following manner. The first device 100 may send an authentication request to the second device via the communication connection, and receive the data to be authenticated sent by the second device in response to the authentication request via the communication connection. For example, in a payment process, the first device 100 may send the authentication request carrying transaction information to the second device, and after receiving the authentication request, the second device sends the data to be authenticated to the first device 100 in response to the authentication request. The second device may extract key information from the transaction information and display the key information after receiving the transaction information, and after receiving the user confirmation, a to-be-authenticated request is sent to the first device 100 to ensure the security of the transaction. In addition, in this alternative implementation, the authentication request may further carry the to-be-calculated information such as the random number etc. determined by the first device 100, and after receiving the authentication request, the second device may sign or encrypt the to-be-calculated information or generate the dynamic password for the to-be-calculated information.

The biological characteristic information includes at least one of the following: fingerprint information, iris information, face information, and vein information. In this embodiment, the first device 100 collects biometric information of the biological limb when the first device approaches the biological limb in close contact with the second device. For example, in a short time period (e.g., 3 second) of the user's finger touching the touch component of the POS machine, the touch component of the POS machine collects fingerprint information. For another example, when the user's wristwatch approaches to the Alipay payment terminal (the payment terminal has a photographing function, which can be used to collect the face information) in a certain distance, the face information is collected by the payment terminal.

In an alternative implementation of the embodiment of the present disclosure, the biological characteristic information may include: the fingerprint information and/or the vein information. In this alternative implementation, the first device 100 collects the biological characteristic information of the biological limb in following manner. The biological characteristic information of the part of the biological limb in contact with the first device 100 is collected when the biological limb is in contact with the first device 100. For example, the user's finger contacts a fingerprint collection portion of the first device 100, or the user's wrist contacts a vein information collection portion of the first device 100. With this alternative implementation, since the user's limb needs to be in contact to the first device 100 to collect the biological characteristic information, the current authentication is permitted by the user, thereby avoiding a situation that the authentication process is triggered caused by an inadvertent proximity between the first device 100 and the second device.

In this embodiment, the background server 200 pre-stores the user's authentication factor and biological characteristic verification information according to the identity identifier (of the second device, or of the user of the second device, or of a security device connected to the second device (e.g., KEY, a dynamic port token, etc.) when, for example, registering the second device or the security device connected to the second device or allocating the second device or the security device connected to the second device to the user, which will not be limited in this embodiment.

In this embodiment, the background server 200 obtains the authentication factor and the biological characteristic verification information according to the authentication identifier information, and uses the authentication factor and the biological characteristic verification information to authenticate the digital authentication information and the biological characteristic information. The authentication factor and the biological characteristic verification information are uniquely associated with authentication identification information. Therefore, the authentication factor and the biological characteristic verification information corresponding to the user can be uniquely queried according to the authentication identification information, such that the digital authentication information and the legitimacy of the user may be guaranteed after the double authentication is passed using the digital authentication information and the biological characteristic information.

In an alternative implementation of the embodiment of the present disclosure, the digital authentication information includes: signature information obtained by digital sign performed on data to be signed using a signature private key; the authentication factor includes: a signature public key corresponding to the signature private key; the background server 200 may perform the authentication on the digital authentication information according to the authentication factor in following manners. The background server 200 performs a signature authentication on the digital authentication information using the signature public key and the data to be signed. In other words, when performing the authentication on the digital authentication information, the background server 200 computes the data to be signed using the signature public key to obtain a signature verification value, and the signature verification value is compared with the received signature information. If the signature verification value is in conformity with the received signature information, the authentication is passed; otherwise, the authentication fails.

In another alternative implementation of the embodiment of the present disclosure, the digital authentication information includes: encrypted information obtained by encrypting information to be encrypted using a symmetric secret key; the authentication factor includes: the symmetric secret key; and the background server 200 performs the authentication on the digital authentication information according to the authentication factor in following manners. The background server 200 performs the authentication on the encrypted information using the symmetric secret key and the information to be encrypted. In other words, when the background server 200 performs the authentication on the digital authentication information, the symmetric secret key is used to encrypt the information to be encrypted, the encrypted verification information obtained after the encryption is compared with the received encrypted information. If the encrypted verification information obtained after the encryption is in conformity with the received encrypted information, the authentication is passed; otherwise, the authentication fails. Alternatively, the received encrypted information may be decrypted by using the symmetric secret key, and the decrypted plaintext information is compared with the information to be encrypted. If the decrypted plaintext information is in conformity with the information to be encrypted, the authentication is passed; otherwise, the authentication fails.

In yet another alternative implementation of the embodiment of the present disclosure, the digital authentication information includes: a dynamic password; the authentication factor includes: a seed secret key for verifying the dynamic password. The background server 200 performs the authentication on the digital authentication information according to the authentication factor in following manners. In other words, when the background server 200 performs the authentication on the digital authentication information, the seed secret key is used to generate the dynamic password, and the generated dynamic password is compared with the received dynamic password. If the generated dynamic password is in conformity with the received dynamic password, the authentication is passed; otherwise, the authentication fails.

In this embodiment, the first preset value indicating the matching rate between the biological characteristic information and the biological characteristic verification information is smaller than the matching rate (i.e., the second preset value) indicating whether two pieces of biological characteristic information is the same biological characteristic information in the actual application. For example, suppose that in actual application, when the matching rate of two pieces of fingerprint information reaches 99% (that is, the ratio indicating that the two pieces of fingerprint information are the same), the two pieces of fingerprint information are considered to be the fingerprint information of the same fingerprint (i.e., the second preset value is 99%); otherwise, the two pieces of fingerprint information are not the fingerprint information of the same fingerprint. The first preset value in this embodiment may be 80%, that is, it is determined whether the matching rate between the received biological characteristic information and the biological characteristic verification information reaches 80% instead of 99%.

There may be a probability of unsuccessful recognition of a real legitimate user using the biological characteristic information authentication technology in the prior art. Taking fingerprint recognition as an example, in many cases, the user's fingerprint is real but the background system identifying error occurs, mistakenly identifying the user's fingerprint as a fake fingerprint, and thus failing to pass the authentication, and the payment transaction cannot be realized; while sometimes, the fingerprint of the illegal user is fake but is also authenticated by the background system, causing economic losses for the legitimate user. These situations occur for a high probability. However, in this embodiment, the double authentication performed on the digital authentication information and the biological characteristic information may prevent from the situation where some illegal users are successfully identified, and can reduce the probability of the situation of unsuccessful recognition of real legitimate user. Firstly, by the above three methods for authenticating the digital authentication information, it can be determined that the user is a legitimate user, and if the user is an illegal user, the digital authentication cannot be passed, then the operation of the fake fingerprint authentication does not occur, thereby prevent from the situation where some illegal users are successfully identified. Secondly, in the case of ensuring that the user is a legitimate user, the background can reduce the similarity criterion of the matching the two pieces of biometric information, so as to reduce the probability of unsuccessful recognition of real legitimate user. For example, theoretically, in order to make the two pieces of biometric information being matched completely, the similarity should reach at least 99% (the second preset value). If the background finds out that the similarity is only 90%, it will be identified as mismatch and the authentication will not be passed, leading to the case where the real fingerprint is recognized as a fake fingerprint. In the present disclosure, since the digital authentication has ensured that the user is a legitimate user, the similarity for perfectly matching can be reduced to 80% (the first preset value), which means that it is considered to be successfully matching as long as the similarity reaches 80% (the first preset value). Therefore, when the similarity of the two pieces of biometric information is 90%, the authentication can be passed, thereby avoiding the situation of unsuccessful recognition of real legitimate user, such that the probability of unsuccessful recognition of real legitimate user in the biological characteristic information authentication technology may be reduced.

With the identity authentication system provided by the embodiment of the present disclosure, the background server 200 performs the double authentication on the digital authentication information and the biological characteristic information, the probability of unsuccessful recognition of real legitimate user may be reduced and the user experience may be improved.

Embodiments of the present disclosure also provides a computer program, when the computer program is run on a processor, the above identity authentication method is performed.

Numerous specific details are described in the specification provided herein. However, it should be understood that the embodiments of the disclosure may be practiced without these specific details. In some examples, well-known methods, structures, and techniques are not illustrated in detail so as not to obscure the understanding of the specification.

Similarly, it should be understood that, in order to simplify the present disclosure and to assist in understanding one or more of the various inventive aspects, in the above description of the exemplary embodiments of the present disclosure, various features of the present disclosure are sometimes grouped together into a single embodiment, figure, or description thereof. However, the method disclosed is not to be interpreted as reflecting the intention that the claimed invention requires more features than those recited in the claims. In more details, as the following claims reflect, inventive aspects reside in less than all features of the single embodiments disclosed herein. Therefore, the claims following the specific embodiments are hereby explicitly incorporated into the specific embodiments, and each of the claims is regarded as a separate embodiment of the disclosure.

Those skilled in the art will appreciate that the modules in the devices of the embodiments may be adaptively changed and placed in one or more devices different from the embodiment. The modules or units or components in the embodiments may be combined into one module or unit or component, or may be divided into a plurality of sub-modules or sub-units or sub-components. In addition to at least some of such features and/or the processes or units being mutually exclusive, all combinations of the features disclosed in this specification, as well as any methods or devices so disclosed, may be combined in any combination. Each feature disclosed in this specification can be replaced by an alternative feature that provides the same, equivalent or similar purpose, unless stated otherwise.

The various component embodiments of the present disclosure may be implemented in hardware, or in a software module running on one or more processors, or in a combination thereof.

Therefore, those skilled in the art will recognize that although a plurality of exemplary embodiments have been shown and described in detail herein, many other variations or modifications in conformity of the principles of the disclosure may be determined or derived directly in accordance with the content disclosed by the present disclosure. Therefore, the scope of the present disclosure should be understood and construed as covering all such other verifications or modifications.

## Claims

1. An identity authentication method, comprising:
detecting, by a first device, that a biological limb of a human body is in contact with the first device and establishing (S102), by the first device, an intra-body communication connection with a second device via the biological limb, the second device being a device implanted in the human body receiving (S104), by the first device, data to be authenticated transmitted by the second device via the intra-body communication connection, the data to be authenticated comprising digital authentication information and an identity identifier associated with the second device;
collecting (S106), by the first device, biological characteristic information of part of the biological limb touching the first device when the biological limb touches the first device during a time period in which the intra-body communication connection is established with the second device;
sending (S108), by the first device, the data to be authenticated and the biological characteristic information to a background server;
receiving (S110), by the background server, the data to be authenticated and the biological characteristic information;
obtaining (S 112), by the background server, a pre-stored authentication factor and biological characteristic verification information corresponding to the identity identifier;
performing (S 114), by the background server, an authentication on the digital authentication information according to the authentication factor, and determining whether a matching rate between the biological characteristic information and the biological characteristic verification information is greater than a first preset value, the first preset value being smaller than a second preset value, the second preset value referring to a matching rate indicating that two pieces of biological characteristic information are identical; and
when the authentication performed on the digital authentication information is passed and the matching rate between the biological characteristic information and the biological characteristic verification information is greater than the first preset value, determining (S116) that an identity authentication for the second device is passed.

2. The method according to claim 1, wherein the biological characteristic information comprises: fingerprint information and/or vein information; and
collecting (S106), by the first device, the biological characteristic information comprises: when a biological limb is in contact with the first device, collecting the biological characteristic information of a portion of the biological limb in contact with the first device.

3. The method according to claim 1 or 2, wherein receiving (S104), by the first device, the data to be authenticated transmitted by the second device via the communication connection comprises:
receiving, by the first device, the data to be authenticated broadcast by the second device via the communication connection; or
sending, by the first device, an authentication request to the second device via the communication connection; and receiving, by the first device, the data to be authenticated transmitted by the second device in response to the authentication request via the communication connection.

4. The method according to any of claims 1 to 3, wherein the digital authentication information comprises: signature information obtained by digital sign performed on data to be signed using a signature private key; the authentication factor comprises: a signature public key corresponding to the signature private key; performing (S114), by the background server, the authentication on the digital authentication information according to the authentication factor comprises: performing, by the background server, a signature authentication on the digital authentication information using the signature public key and the data to be signed; or
the digital authentication information comprises: encrypted information obtained by encrypting information to be encrypted using a symmetric secret key; the authentication factor comprises: the symmetric secret key; and performing (S114), by the background server, the authentication on the digital authentication information according to the authentication factor comprises: performing, by the background server, the authentication on the encrypted information using the symmetric secret key and the information to be encrypted; or
the digital authentication information comprises: a dynamic password; the authentication factor comprises: a seed secret key for verifying the dynamic password; performing (S114), by the background server, the authentication on the digital authentication information according to the authentication factor comprises: performing, by the background server, the authentication on the dynamic password at least using the seed secret key.

5. The method according to any of claims 1 to 4, wherein establishing (S102), by the first device, the communication connection with the second device comprises:
establishing, by the first device, the communication connection with the second device via a biological limb.

6. An identity authentication system, comprising: a first device (100) and a background server (200), wherein the first device (100) is configured to:
detect that a biological limb of a human body is in contact with the first device and establish an intra-body communication connection with a second device via the biological limb, the second device being a device implanted in the human body
receive data to be authenticated transmitted by the second device via the intra-body communication connection, the data to be authenticated comprising digital authentication information and an identity identifier associated with the second device;
collect biological characteristic information of part of the biological limb touching the first device when the biological limb touches the first device during a time period in which the intra-body communication connection is established with the second device; and
send the data to be authenticated and the biological characteristic information to the background server (200);
the background server (200) is configured to:
receive the data to be authenticated and the biological characteristic information;
obtain a pre-stored authentication factor and biological characteristic verification information corresponding to the identity identifier;
perform an authentication on the digital authentication information according to the authentication factor, and determine whether a matching rate between the biological characteristic information and the biological characteristic verification information is greater than a first preset value, the first preset value being smaller than a second preset value, the second preset value referring to a matching rate indicating that two pieces of biological characteristic information are identical; and
when the authentication performed on the digital authentication information is passed and the matching rate between the biological characteristic information and the biological characteristic verification information is greater than the first preset value, determine that an identity authentication for the second device is passed.

7. The system according to claim 6, wherein the biological characteristic information comprises: fingerprint information and/or vein information; and
the first device (100) collects the biological characteristic information by an act of: when the biological limb is in contact with the first device (100), collecting the biological characteristic information of a portion of the biological limb in contact with the first device (100).

8. The system according to claim 6 or 7, wherein the first device (100) receives the data to be authenticated transmitted by the second device via the communication connection by acts of:
receiving, by the first device (100), the data to be authenticated broadcast by the second device via the communication connection; or
sending, by the first device (100), an authentication request to the second device via the communication connection; and receiving, by the first device (100), the data to be authenticated transmitted by the second device in response to the authentication request via the communication connection.

9. The system according to any of claims 6 to 8, wherein the digital authentication information comprises: signature information obtained by digital sign performed on data to be signed using a signature private key; the authentication factor comprises: a signature public key corresponding to the signature private key; the background server (200) performs the authentication on the digital authentication information according to the authentication factor by an act of: performing, by the background server (200), a signature authentication on the digital authentication information using the signature public key and the data to be signed; or
the digital authentication information comprises: encrypted information obtained by encrypting information to be encrypted using a symmetric secret key; the authentication factor comprises: the symmetric secret key; and the background server (200) performs the authentication on the digital authentication information according to the authentication factor by an act of: performing, by the background server (200), the authentication on the encrypted information using the symmetric secret key and the information to be encrypted; or
the digital authentication information comprises: a dynamic password; the authentication factor comprises: a seed secret key for verifying the dynamic password; the background server (200) performs the authentication on the digital authentication information according to the authentication factor by an act of: performing, by the background server, the authentication on the dynamic password at least using the seed secret key.

10. The system according to any of claims 6 to 9, wherein the first device (100) establishes the communication connection with the second device by an act of:
establishing, by the first device (100), the communication connection with the second device via a biological limb.

11. A computer program, when run on a processor, configured to perform an identity authentication method according to any of claims 1-5.

12. A non-transitory computer-readable storage medium having stored therein instructions that, when executed by a processor, causes the processor to perform an identity authentication method according to any of claims 1-5.

## Patentansprüche

1. Ein Verfahren zur Identitätsauthentifizierung, wobei das Verfahren die folgenden Schritte umfasst:
Erkennen mittels einer ersten Vorrichtung, dass ein biologisches Element eines menschlichen Körpers mit der ersten Vorrichtung in Kontakt steht, und Herstellen (S102) einer intrakorporalen Kommunikationsverbindung mit einer zweiten Vorrichtung über das biologische Element mittels der ersten Vorrichtung, wobei die zweite Vorrichtung eine in den menschlichen Körper implantierte Vorrichtung ist;
Empfangen (S104) mittels der ersten Vorrichtung von zu authentifizierenden Daten, die von der zweiten Vorrichtung über die intrakorporale Kommunikationsverbindung übertragen werden, wobei die zu authentifizierenden Daten digitale Authentisierungsinformationen und eine der zweiten Vorrichtung zugeordnete Identitätskennung umfassen;
Sammeln (S106), durch die erste Vorrichtung, von Informationen über biologische Merkmale eines Teils des biologischen Elements, das die erste Vorrichtung berührt, wenn das biologische Element die erste Vorrichtung während einer Zeitspanne berührt, in der die intrakorporale Kommunikationsverbindung mit der zweiten Vorrichtung hergestellt ist;
Senden (S108), mit dem ersten Gerät, der zu authentifizierenden Daten und der Informationen über die biologischen Merkmale an einen Hintergrundserver;
Empfangen (S110) der zu authentifizierenden Daten und der Informationen über die biologischen Merkmale mit Hilfe des Hintergrundservers;
Einholung (S112) eines zuvor gespeicherten Authentifizierungsfaktors und von Informationen zur Verifizierung biologischer Merkmale, die der Identitätskennung entsprechen, mit Hilfe des Hintergrundservers;
Durchführen (S114), mittels des Hintergrundservers, einer Authentifizierung auf der Grundlage des Authentifizierungsfaktors auf den digitalen Authentifizierungsinformationen und ein Bestimmen, ob eine Übereinstimmungsrate zwischen den biologischen Merkmalsinformationen und den Verifizierungsinformationen der biologischen Merkmale größer als ein erster voreingestellter Wert ist, wobei der erste voreingestellte Wert kleiner als ein zweiter voreingestellter Wert ist, wobei der zweite voreingestellte Wert sich auf eine Übereinstimmungsrate bezieht, die anzeigt, dass zwei biologische Merkmalsinformationen identisch sind; und ein Bestimmen (S115), mittels des Hintergrundservers, ob eine Übereinstimmungsrate zwischen den digitalen Authentifizierungsinformationen und den Verifizierungsinformationen der biologischen Merkmale größer als ein erster voreingestellter Wert ist, wobei der erste voreingestellte Wert kleiner als ein zweiter voreingestellter Wert ist, wobei der zweite voreingestellte Wert sich auf eine Übereinstimmungsrate bezieht, die anzeigt, dass zwei biologische Merkmalsinformationen identisch sind.
wenn die anhand der digitalen Authentifizierungsinformationen durchgeführte Authentifizierung erfolgreich war und die Übereinstimmungsrate zwischen den Informationen über die biologischen Merkmale und den Informationen zur Verifizierung der biologischen Merkmale größer als der erste vordefinierte Wert ist, wird festgestellt (S116),
dass eine Identitätsauthentifizierung für das zweite Gerät erfolgreich war.

2. Das Verfahren nach Anspruch 1, wobei ferner die biologischen charakteristischen Informationen ferner umfassen: Fingerabdruckinformationen und/oder Veneninformationen; und
das Sammeln (S106) von Informationen über biologische Merkmale durch die erste Vorrichtung umfasst den folgenden Schritt: wenn ein biologisches Element mit der ersten Vorrichtung in Kontakt ist, Sammeln von Informationen über biologische Merkmale eines Teils des biologischen Elements, das mit der ersten Vorrichtung in Kontakt ist.

3. Das Verfahren nach Anspruch 1 oder 2, wobei ferner der Empfang (S104) von zu authentifizierenden Daten, die von der zweiten Vorrichtung über die Kommunikationsverbindung übertragen werden, durch die erste Vorrichtung den folgenden Schritt bzw. die folgenden Schritte umfasst:
Empfang der zu authentifizierenden Daten durch das erste Gerät, die durch das zweite Gerät über die Kommunikationsverbindung gesendet werden; oder
Senden, mittels der ersten Vorrichtung, einer Authentifizierungsanforderung an die zweite Vorrichtung über die Kommunikationsverbindung; und Empfangen, mittels der ersten Vorrichtung, von zu authentifizierenden Daten, die von der zweiten Vorrichtung als Antwort auf die Authentifizierungsanforderung über die Kommunikationsverbindung übertragen wurden.

4. Verfahren nach einem der Ansprüche 1 bis 3, wobei die digitale Authentifizierungsinformation umfasst:
Signaturinformation, die durch digitales Signieren von zu signierenden Daten unter Verwendung eines privaten Signaturschlüssels erhalten wird; der
Authentifizierungsfaktor umfasst : einen öffentlichen Signierschlüssel, der dem privaten Signierschlüssel entspricht; das Durchführen (S114) durch den Hintergrundserver einer Authentifizierung an den digitalen Authentifizierungsinformationen gemäß dem Authentifizierungsfaktor umfasst den folgenden Schritt:
Durchführen einer Signatur-Authentifizierung an den digitalen Authentifizierungsinformationen durch den Hintergrundserver unter Verwendung des öffentlichen Signierschlüssels und der zu signierenden Daten; oder
Durchführen einer Signatur-Authentifizierung an den digitalen Authentifizierungsinformationen durch den Hintergrundserver unter Verwendung des öffentlichen Signierschlüssels und der zu signierenden Daten; oder
wobei die digitalen Authentifizierungsinformationen umfassen: verschlüsselte Informationen, die durch Verschlüsseln der zu verschlüsselnden Informationen mit einem symmetrischen geheimen Schlüssel erhalten werden;
der Authentifizierungsfaktor umfasst : des symmetrischen geheimen Schlüssels; und Durchführen (S114) einer Authentifizierung an den digitalen Authentifizierungsinformationen gemäß dem Authentifizierungsfaktor durch den Hintergrundserver, umfassend den Schritt: Durchführen einer Authentifizierung an den unter Verwendung des symmetrischen geheimen Schlüssels verschlüsselten Informationen und den zu verschlüsselnden Informationen durch den Hintergrundserver; oder Durchführen einer Authentifizierung an den unter Verwendung des symmetrischen geheimen Schlüssels verschlüsselten Informationen und den zu verschlüsselnden Informationen durch den Hintergrundserver; und Durchführen einer Authentifizierung an den unter Verwendung des symmetrischen geheimen Schlüssels verschlüsselten Informationen und den zu verschlüsselnden Informationen durch den Hintergrundserver; oder
die digitalen Authentisierungsinformationen umfassen: ein dynamisches Passwort; der Authentisierungsfaktor umfasst: einen geheimen Diversifikationsschlüssel zum Verifizieren des dynamischen Passworts; die Durchführung (S114) der Authentisierung an den digitalen Authentisierungsinformationen gemäß dem Authentisierungsfaktor durch den Hintergrundserver umfasst den folgenden Schritt: Durchführung der Authentisierung an dem dynamischen Passwort durch den Hintergrundserver unter Verwendung mindestens des geheimen Diversifikationsschlüssels.

5. Verfahren nach einem der Ansprüche 1 bis 4, wobei ferner die Herstellung (S102) der Kommunikationsverbindung mit der zweiten Vorrichtung durch die erste Vorrichtung den folgenden Schritt umfasst:
durch die erste Vorrichtung die Kommunikationsverbindung mit der zweiten Vorrichtung über ein biologisches Glied herzustellen.

6. Ein Identitätsauthentifizierungssystem, ferner umfassend: eine erste Vorrichtung (100) und einen Hintergrundserver (200), wobei die erste Vorrichtung (100) konfiguriert ist, um :
Feststellung, dass ein biologisches Glied eines menschlichen Körpers mit der ersten Vorrichtung in Kontakt steht, und Herstellung einer intrakorporalen Kommunikationsverbindung mit einer zweiten Vorrichtung über das biologische Glied, wobei die zweite Vorrichtung eine in den menschlichen Körper implantierte Vorrichtung ist;
Empfang von zu authentifizierenden Daten, die von der zweiten Vorrichtung über die intrakorporale Kommunikationsverbindung übertragen werden, wobei die zu authentifizierenden Daten digitale
Authentifizierungsinformationen und eine der zweiten Vorrichtung zugeordnete Identitätskennung umfassen;
Sammeln von Informationen über biologische Eigenschaften eines Teils des biologischen Elements, das die erste Vorrichtung berührt, wenn das biologische Element die erste Vorrichtung während einer Zeitspanne berührt, in der die intrakorporale Kommunikationsverbindung mit der zweiten Vorrichtung hergestellt ist; und Sammeln von Informationen über biologische Eigenschaften eines Teils des biologischen Elements, das die erste Vorrichtung berührt, wenn das biologische Element die erste Vorrichtung während einer Zeitspanne berührt, in der die intrakorporale Kommunikationsverbindung mit der zweiten Vorrichtung hergestellt ist.
die zu authentifizierenden Daten und Informationen über biologische Merkmale an den Hintergrundserver senden (200) ;
der Hintergrundserver (200) ist konfiguriert auf:
die zu authentifizierenden Daten und Informationen über biologische Merkmale erhalten;
einen zuvor gespeicherten Authentifizierungsfaktor und Informationen zur Verifizierung biologischer Merkmale erhalten, die der Identitätskennung entsprechen;
Durchführen einer Authentifizierung an den digitalen Authentifizierungsinformationen auf der Grundlage des Authentifizierungsfaktors und ein Bestimmen, ob eine Übereinstimmungsrate zwischen den biologischen Merkmalsinformationen und den biologischen Merkmalsverifizierungsinformationen größer als ein erster vordefinierter Wert ist, wobei der erste vordefinierte Wert kleiner als ein zweiter vordefinierter Wert ist,
wobei der zweite vordefinierte Wert sich auf eine Übereinstimmungsrate bezieht, die anzeigt, dass zwei biologische Merkmalsinformationen identisch sind; und ein Bestimmen, ob eine Übereinstimmungsrate größer als ein zweiter vordefinierter Wert ist, wobei der zweite vordefinierte Wert sich auf eine Übereinstimmungsrate bezieht, die anzeigt, dass zwei biologische Merkmalsinformationen identisch sind.
wenn die anhand der digitalen Authentifizierungsinformationen durchgeführte Authentifizierung erfolgreich war und die Übereinstimmungsrate zwischen den Informationen über die biologischen Merkmale und den Verifizierungsinformationen über die biologischen Merkmale größer als der erste vordefinierte Wert ist, wird festgestellt, dass eine Identitätsauthentifizierung für das zweite Gerät erfolgreich war.

7. Das System nach Anspruch 6, wobei ferner die Informationen über die biologischen Merkmale umfassen:
Fingerabdruck-Informationen und/oder Venen-Informationen ; und
die erste Vorrichtung (100) die biologisch charakteristischen Informationen durch eine Handlung sammelt: wenn das biologische Glied in Kontakt mit der ersten Vorrichtung (100) ist, Sammeln der biologisch charakteristischen Informationen von einem Teil des biologischen Gliedes, das in Kontakt mit der ersten Vorrichtung (100) ist.

8. Das System nach Anspruch 6 oder 7, wobei ferner die erste Vorrichtung (100) die zu authentifizierenden Daten empfängt, die von der zweiten Vorrichtung über die Kommunikationsverbindung übertragen werden, und zwar durch folgende Aktionen: wenn das biologische Element mit der ersten Vorrichtung (100) in Kontakt ist, Sammeln biologischer charakteristischer Informationen eines Teils des biologischen Elements, das mit der ersten Vorrichtung (100) in Kontakt ist. 8:
Empfang der zu authentifizierenden Daten mittels der ersten Vorrichtung (100), die von der zweiten Vorrichtung über die Kommunikationsverbindung gesendet werden; oder
Senden, mittels der ersten Vorrichtung (100), einer Authentifizierungsanforderung an die zweite Vorrichtung über die Kommunikationsverbindung; und Empfangen, mittels der ersten Vorrichtung (100), von zu authentifizierenden Daten, die von der zweiten Vorrichtung als Antwort auf die Authentifizierungsanforderung über die Kommunikationsverbindung übertragen wurden.

9. Das System nach einem der Ansprüche 6 bis 8, wobei ferner die digitale Authentifizierungsinformation umfasst: Signaturinformation, die durch digitales Signieren von zu signierenden Daten unter Verwendung eines privaten Signaturschlüssels erhalten wird; der Authentifizierungsfaktor umfasst : einen öffentlichen Signierschlüssel, der dem privaten Signierschlüssel entspricht; der Hintergrundserver (200) führt eine Authentifizierung an den digitalen Authentifizierungsinformationen entsprechend dem Authentifizierungsfaktor durch eine Aktion aus:
Durchführen einer Signatur-Authentifizierung an den digitalen Authentifizierungsinformationen durch den Hintergrundserver (200) unter Verwendung des öffentlichen Signierschlüssels und der zu signierenden Daten; oder
Durchführen einer Signatur-Authentifizierung an den digitalen Authentifizierungsinformationen durch den Hintergrundserver (200) unter Verwendung des öffentlichen Signierschlüssels und der zu signierenden Daten; und
Durchführen einer Signatur-Authentifizierung an den digitalen Authentifizierungsinformationen durch den Hintergrundserver (200) unter Verwendung des öffentlichen Signierschlüssels und der zu signierenden Daten;
wobei ferner die digitalen Authentisierungsinformationen umfassen: verschlüsselte Informationen, die durch Verschlüsseln von zu verschlüsselnden Informationen unter Verwendung eines symmetrischen geheimen Schlüssels erhalten werden; der Authentisierungsfaktor umfasst: den symmetrischen geheimen Schlüssel; und der Hintergrundserver (200) führt eine Authentisierung an den digitalen Authentisierungsinformationen gemäß dem Authentisierungsfaktor durch eine Handlung durch: ein Durchführen, mittels des Hintergrundservers (200), einer Authentisierung an den Informationen, die unter Verwendung des symmetrischen geheimen Schlüssels verschlüsselt wurden, und den zu verschlüsselnden Informationen; oder
die digitalen Authentisierungsinformationen umfassen ferner: ein dynamisches Passwort; der
Authentisierungsfaktor umfasst ferner: einen geheimen Diversifikationsschlüssel zum Verifizieren des dynamischen Passworts; der Hintergrundserver (200) führt die Authentisierung an den digitalen Authentisierungsinformationen auf der Grundlage des Authentisierungsfaktors durch eine Aktion durch: ein Durchführen, mittels des Hintergrundservers, einer Authentisierung an dem dynamischen Passwort unter Verwendung mindestens des geheimen Diversifikationsschlüssels.

10. Das System nach einem der Ansprüche 6 bis 9, wobei die erste Vorrichtung (100) die Kommunikationsverbindung mit der zweiten Vorrichtung durch eine Aktion von:
durch die erste Vorrichtung (100) die Kommunikationsverbindung mit der zweiten Vorrichtung durch ein biologisches Glied herzustellen.

11. Ein Computerprogramm, das, wenn es auf einem Prozessor ausgeführt wird, einen Identitätsauthentifizierungsprozess gemäß einem der Ansprüche 1 bis 5 implementiert.

12. Ein computerlesbares, nichtflüchtiges Speichermedium, auf dem Anweisungen gespeichert sind, die, wenn sie von einem Prozessor ausgeführt werden, den Prozessor veranlassen, einen Prozess zur Authentifizierung der Identität gemäß einem der Ansprüche 1 bis 5 durchzuführen.

## Revendications

1. Procédé d'authentification d'identité, comprenant les étapes suivantes :
détecter, au moyen d'un premier dispositif, qu'un membre biologique de corps humain est en contact avec le premier dispositif et établir (S102), au moyen du premier dispositif, une connexion de communication intracorporelle avec un second dispositif par le biais du membre biologique, le second dispositif étant un dispositif implanté dans le corps humain ;
recevoir (S104), au moyen du premier dispositif, des données à authentifier, transmises par le second dispositif par le biais de la connexion de communication intracorporelle, les données à authentifier comprenant des informations d'authentification numérique et un identificateur d'identité associé au second dispositif ;
collecter (S106), au moyen du premier dispositif, des informations de caractéristiques biologiques d'une partie du membre biologique touchant le premier dispositif, lorsque le membre biologique touche le premier dispositif au cours d'une période de temps où la connexion de communication intracorporelle est établie avec le second dispositif ;
envoyer (S108), au moyen du premier dispositif, les données à authentifier et les informations de caractéristiques biologiques à un serveur d'arrière-plan ;
recevoir (S110), au moyen du serveur d'arrière-plan, les données à authentifier et les informations de caractéristiques biologiques ;
obtenir (S112), au moyen du serveur d'arrière-plan, un facteur d'authentification préalablement stocké et des informations de vérification de caractéristiques biologiques correspondant à l'identificateur d'identité ;
réaliser (S114), au moyen du serveur d'arrière-plan, une authentification sur les informations d'authentification numérique en fonction du facteur d'authentification, et déterminer si un taux de correspondance entre les informations de caractéristiques biologiques et les informations de vérification de caractéristiques biologiques est supérieur à une première valeur prédéfinie, la première valeur prédéfinie étant inférieure à une seconde valeur prédéfinie, la seconde valeur prédéfinie faisant référence à un taux de correspondance indiquant que deux informations de caractéristiques biologiques sont identiques ; et
lorsque l'authentification réalisée sur les informations d'authentification numérique a réussi et que le taux de correspondance entre les informations de caractéristiques biologiques et les informations de vérification de caractéristiques biologiques est supérieur à la première valeur prédéfinie, déterminer (S116) qu'une authentification d'identité pour le second dispositif a réussi.

2. Procédé selon la revendication 1, dans lequel les informations de caractéristiques biologiques comprennent : des informations sur les empreintes digitales et/ou des informations sur les veines ; et
la collecte (S106), par le premier dispositif, des informations de caractéristiques biologiques comprend l'étape suivante : lorsqu'un membre biologique est en contact avec le premier dispositif, collecter des informations de caractéristiques biologiques d'une partie du membre biologique en contact avec le premier dispositif.

3. Procédé selon la revendication 1 ou 2, dans lequel la réception (S104), par le premier dispositif, des données à authentifier, transmises par le second dispositif par le biais de la connexion de communication comprend la ou les étape(s) suivante(s) :
recevoir, au moyen du premier dispositif, les données à authentifier, diffusées par le second dispositif, par le biais de la connexion de communication ; ou
envoyer, au moyen du premier dispositif, une demande d'authentification au second dispositif, par le biais de la connexion de communication ; et recevoir, au moyen du premier dispositif, les données à authentifier, transmises par le second dispositif, en réponse à la demande d'authentification, par le biais de la connexion de communication.

4. Procédé selon l'une quelconque des revendications 1 à 3, dans lequel les informations d'authentification numérique comprennent : des informations de signature obtenues par signature numérique effectuée sur des données à signer à l'aide d'une clé privée de signature ; le facteur d'authentification comprend : une clé publique de signature correspondant à la clé privée de signature ; la réalisation (S114), par le serveur d'arrière-plan, de l'authentification sur les informations d'authentification numérique en fonction du facteur d'authentification comprend l'étape suivante : réaliser, au moyen du serveur d'arrière-plan, une authentification de signature sur les informations d'authentification numérique à l'aide de la clé publique de signature et des données à signer ; ou
les informations d'authentification numérique comprennent :
des informations chiffrées, obtenues par chiffrement d'informations à chiffrer à l'aide d'une clé secrète symétrique ; le facteur d'authentification comprend : la clé secrète symétrique ; et la réalisation (S114), par le serveur d'arrière-plan, de l'authentification sur les informations d'authentification numérique en fonction du facteur d'authentification comprend l'étape suivante : réaliser, au moyen du serveur d'arrière-plan, l'authentification sur les informations chiffrées à l'aide de la clé secrète symétrique et des informations à chiffrer ; ou
les informations d'authentification numérique comprennent : un mot de passe dynamique ; le facteur d'authentification comprend : une clé secrète de diversification permettant de vérifier le mot de passe dynamique ; la réalisation (S114), par le serveur d'arrière-plan, de l'authentification sur les informations d'authentification numérique en fonction du facteur d'authentification comprend l'étape suivante : réaliser, au moyen du serveur d'arrière-plan, l'authentification sur le mot de passe dynamique au moins à l'aide de la clé secrète de diversification.

5. Procédé selon l'une quelconque des revendications 1 à 4, dans lequel l'établissement (S102) par le premier dispositif, de la connexion de communication avec le second dispositif comprend l'étape suivante :
établir, au moyen du premier dispositif, la connexion de communication avec le second dispositif par le biais d'un membre biologique.

6. Système d'authentification d'identité, comprenant : un premier dispositif (100) et un serveur d'arrière-plan (200), dans lequel le premier dispositif (100) est configuré pour :
détecter qu'un membre biologique de corps humain est en contact avec le premier dispositif et établir une connexion de communication intracorporelle avec un second dispositif par le biais du membre biologique, le second dispositif étant un dispositif implanté dans le corps humain ;
recevoir des données à authentifier, transmises par le second dispositif par le biais de la connexion de communication intracorporelle, les données à authentifier comprenant des informations d'authentification numérique et un identificateur d'identité associé au second dispositif ;
collecter des informations de caractéristiques biologiques d'une partie du membre biologique touchant le premier dispositif, lorsque le membre biologique touche le premier dispositif au cours d'une période de temps où la connexion de communication intracorporelle est établie avec le second dispositif ; et
envoyer les données à authentifier et les informations de caractéristiques biologiques au serveur d'arrière-plan (200) ;
le serveur d'arrière-plan (200) est configuré pour :
recevoir les données à authentifier et les informations de caractéristiques biologiques ;
obtenir un facteur d'authentification préalablement stocké et des informations de vérification de caractéristiques biologiques correspondant à l'identificateur d'identité ;
réaliser une authentification sur les informations d'authentification numérique en fonction du facteur d'authentification, et déterminer si un taux de correspondance entre les informations de caractéristiques biologiques et les informations de vérification de caractéristiques biologiques est supérieur à une première valeur prédéfinie, la première valeur prédéfinie étant inférieure à une seconde valeur prédéfinie, la seconde valeur prédéfinie faisant référence à un taux de correspondance indiquant que deux informations de caractéristiques biologiques sont identiques ; et
lorsque l'authentification réalisée sur les informations d'authentification numérique a réussi et que le taux de correspondance entre les informations de caractéristiques biologiques et les informations de vérification de caractéristiques biologiques est supérieur à la première valeur prédéfinie, déterminer qu'une authentification d'identité pour le second dispositif a réussi.

7. Système selon la revendication 6, dans lequel les informations de caractéristiques biologiques comprennent : des informations sur les empreintes digitales et/ou des informations sur les veines ; et
le premier dispositif (100) collecte les informations de caractéristiques biologiques par une action consistant à : lorsque le membre biologique est en contact avec le premier dispositif (100), collecter les informations de caractéristiques biologiques d'une partie du membre biologique en contact avec le premier dispositif (100).

8. Système selon la revendication 6 ou 7, dans lequel le premier dispositif (100) reçoit les données à authentifier, transmises par le second dispositif par le biais de la connexion de communication, par des actions consistant à :
recevoir, au moyen du premier dispositif (100), les données à authentifier, diffusées par le second dispositif, par le biais de la connexion de communication ; ou
envoyer, au moyen du premier dispositif (100), une demande d'authentification au second dispositif, par le biais de la connexion de communication ; et recevoir, au moyen du premier dispositif (100), les données à authentifier, transmises par le second dispositif, en réponse à la demande d'authentification, par le biais de la connexion de communication.

9. Système selon l'une quelconque des revendications 6 à 8, dans lequel les informations d'authentification numérique comprennent : des informations de signature obtenues par signature numérique effectuée sur des données à signer à l'aide d'une clé privée de signature ; le facteur d'authentification comprend : une clé publique de signature correspondant à la clé privée de signature ; le serveur d'arrière-plan (200) réalise l'authentification sur les informations d'authentification numérique en fonction du facteur d'authentification par une action consistant à :
réaliser, au moyen du serveur d'arrière-plan (200), une authentification de signature sur les informations d'authentification numérique à l'aide de la clé publique de signature et des données à signer ; ou
les informations d'authentification numérique comprennent : des informations chiffrées, obtenues par chiffrement d'informations à chiffrer à l'aide d'une clé secrète symétrique ; le facteur d'authentification comprend : la clé secrète symétrique ; et le serveur d'arrière-plan (200) réalise l'authentification sur les informations d'authentification numérique en fonction du facteur d'authentification par une action consistant à : réaliser, au moyen du serveur d'arrière-plan (200), l'authentification sur les informations chiffrées à l'aide de la clé secrète symétrique et des informations à chiffrer ; ou
les informations d'authentification numérique comprennent : un mot de passe dynamique ; le facteur d'authentification comprend : une clé secrète de diversification permettant de vérifier le mot de passe dynamique ; le serveur d'arrière-plan (200) réalise l'authentification sur les informations d'authentification numérique en fonction du facteur d'authentification par une action consistant à : réaliser, au moyen du serveur d'arrière-plan, l'authentification sur le mot de passe dynamique au moins à l'aide de la clé secrète de diversification.

10. Système selon l'une quelconque des revendications 6 à 9, dans lequel le premier dispositif (100) établit la connexion de communication avec le second dispositif, par une action consistant à :
établir, au moyen du premier dispositif (100), la connexion de communication avec le second dispositif par le biais d'un membre biologique.

11. Programme informatique, conçu pour, lorsqu'il est exécuté sur un processeur, mettre en œuvre un procédé d'authentification d'identité selon l'une quelconque des revendications 1 à 5.

12. Support de stockage non transitoire lisible par ordinateur, sur lequel sont stockées des instructions qui, lorsqu'elles sont exécutées par un processeur, font mettre en œuvre au processeur un procédé d'authentification d'identité selon l'une quelconque des revendications 1 à 5.
